# EUROPÄISCHE PATENTSCHRIFT

(11) **EP 0 443 470 B1**
(45) Veröffentlichungstag und Bekanntmachung des Hinweises auf die Patenterteilung: **10.05.1995**
(21) Anmeldenummer: 91102222.6
(22) Anmeldetag: 16.02.1991
(51) Int. Cl.: B29C 53/56, B29C 53/82, F16C 3/02, B29C 70/06, B29C 53/60

(54) **Verfahren und Vorrichtung zur Herstellung von Bauelementen aus Faserverbundwerkstoffen**
Method and apparatus for producing fribre reinforced composite members
Procédé et appareil pour la fabrication d'éléments de construction en matériau composite renforcé par des fibres

(30) Priorität: 23.02.1990 DE 4005771
(43) Veröffentlichungstag der Anmeldung: 28.08.1991
(73) Patentinhaber: Deutsche Forschungsanstalt für Luft- und Raumfahrt e.V., 51126 Köln (DE)
(72) Erfinder: Pabsch, Arno, W-3300 Braunschweig (DE); Strehlow, Werner, W-3340 Wolfenbüttel (DE)
(74) Vertreter: Einsel, Martin, Dipl.-Phys.

(56) Entgegenhaltungen:
- EP-A- 0 285 156
- DE-A- 2 927 955
- FR-A- 2 637 536
- US-A- 3 970 495

## Beschreibung

Die Erfindung bezieht sich auf ein Verfahren zur Herstellung von Bauelementen aus Faserverbundwerkstoffen, die an einen rohrförmigen Bereich anschließend wenigstens einen planen Flansch aufweisen, nach dem Oberbegriff des unabhängigen Anspruches 1 und Vorrichtungen zur Durchführung des Verfahrens.

Ein Verfahren der gattingsgemäßen Art ist zur Herstellung von Kupplungselementen mit einem balgenförmigen Ausgleichselement bekannt (DE-PS 29 27 955). Das Ausgleichselement weist dabei zwei Flanschscheiben auf, die an ihrem äußeren Umfang durch den Faserverbundwerkstoff verbunden sind. Auf einem Teil eines Wickeldorns wird dabei ein in Form und Abmaßen dem Mittelteil entsprechender Kern und daran anschließend eine verschiebbare Hülse positioniert. Die Wicklung wird dabei beidseitig konisch um den Kern gewickelt. Nach Fertigstellung der Wicklung wird mittels eines Preßwerkzeuges die Wicklung und/oder das Laminat samt der Hülse und dem Kern in Achsrichtung zusammengeschoben und ausgehärtet. Bei diesem Verfahren ist keine geordnete Spreizung der Fasern aus dem Wickelkonus in die Ebene der Flansche möglich, ohne die eine ausreichende Lebensdauer nicht erreichbar ist.

Aufgabe der Erfindung sind ein Verfahren und zur Durchführung dieses Verfahrens zweckmäßige Vorrichtungen, mit denen Ausgleichselemenete herstellbar sind, bei denen im Flanschbereich ein geordneter Faserverlauf sichergestellt wird.

Diese Aufgabe wird gemäß der Erfindung gelöst durch die im kennzeichnenden Teil des unabhängigen Anspruches 1 herausgestellten Merkmale. Zweckmäßige Ausgestaltungen des Verfahrens sind Gegenstand der abhängigen Ansprüche 2 - 4.

Vorrichtungen für die Durchführung des Verfahrens sind Gegenstände der unabhängigen Ansprüche 5, 7 und 10.

Die Erfindung ist in der Zeichnung beispielsweise veranschaulicht und nachstehend im einzelnen anhand der Zeichnung beschrieben. Es zeigen:
- Fig. 1: schematisch eine erste Ausführungsform einer Vorrichtung zur Herstellung von Ausgleichskupplungen;

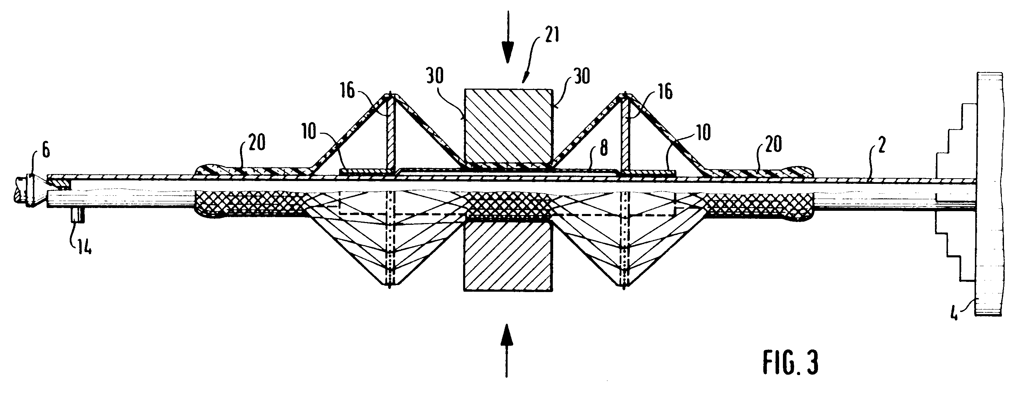

- Fig. 2 bis 9: die Vorrichtung in verschiedenen Verfahrensschritten des Herstellungsverfahrens, wobei Fig. 9 einen vergrößerter Ausschnitt aus Fig. 8 wiedergibt;
- Fig. 10: eine zweite Ausführungsform einer Vorrichtung zur Herstellung von Ausgleichskupplungen;
- Fig. 11 bis 15: verschiedene Stadien des Herstellungsverfahrens;
- Fig. 16: eine dritte Ausführungsform einer Vorrichtung zur Herstellung von Ausgleichskupplungen;
- Fig. 17: die Vorrichtung nach Fig. 16 beim abschliessenden Verfahrensschritt;
- Fig. 18: eine Ansicht der konischen Abschnitte des Wickelkerns von der Spitze des Konus gesehen;
- Fig. 19: den Verlauf der Faserstränge im fertigen Flansch;

Die in den Zeichnungen dargestellten Vorrichtungen sind Vorrichtungen zum Herstellen von Ausgleichskupplungen aus Faserverbundwerkstoffen. Die Fasern können hierbei Glasfasern, Kohlefasern oder sonstige Fasern sein, wie sie üblicherweise zur Herstellung von Faserverbundwerkstoffen angewendet werden, wobei die Matrix aus einem Kunstharz oder auch aus einem thermoplastischen Kunststoff bestehen kann. Die Wahl des Werkstoffes richtet sich hierbei nach den Anforderungen, die an das Bauelement gestellt werden. Für das Herstellungsverfahren ist die Art der Fasern und des Werkstoffes für die Matrix von sekundärer Bedeutung. Auf sie wird daher im einzelnen nicht eingegangen. Im Nachstehenden ist das Verfahren unter Verwendung von Kunstharz beschrieben.

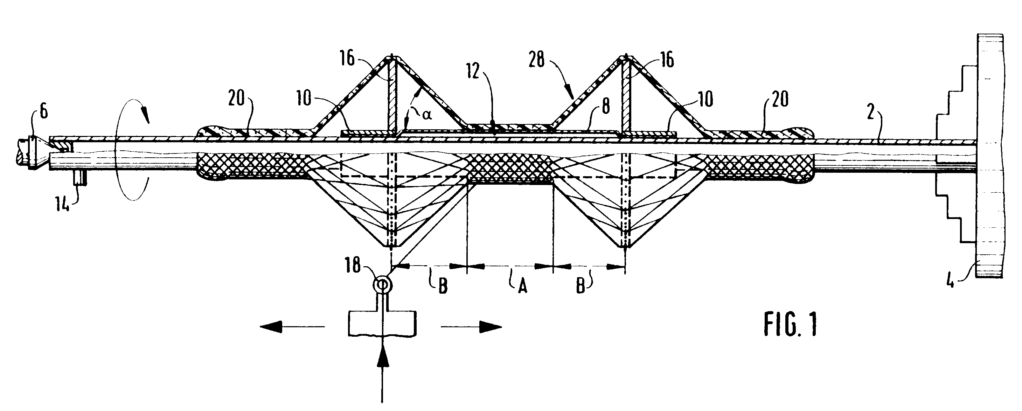

Das in Fig. 1 dargestellte Werkzeug weist einen Kernträger 2 auf, der drehbar gelagert ist, wie hier durch ein schematisch dargestelltes Spannfutter 4 veranschaulicht ist, in das der Kernträger 2 eingespannt ist. Das gegenüberliegende Ende des Kernträgers 2 ist in einer mitlaufenden Spitze 6 abgestützt. Der Wickelkern ist durch einen Gummischlauch 8 gebildet, der an seinen Enden über ringförmige Befestigungselemente 10 abdichtend in Anlage an dem Kernträger 2 gehalten wird. Der dazwischen liegende Bereich des Gummischlauches 8 ist über eine luftführende Zwischenschicht 12 auf dem Kernrohr abgestützt. In diesem Bereich ist in dem rohrförmigen Kernträger 2 eine Anschlußbohrung vorgesehen. Der rohrförmige Kernträger 2 ist an den Enden geschlossen und an einem Ende mit einem Anschluß 14 versehen, über den der Kernträger 2 einerseits mit einer Vakuumquelle und andererseits mit einem Druckluftquelle verbindbar ist. Auf den Befestigungselementen 10 sind Spreizscheiben 16 lösbar befestigt, die außen mit Fixierstiften versehen sein können. Die Vorrichtung ist weiter mit einer Fadenführung versehen, die hier schematisch durch ein Fadenauge 18 veranschaulicht ist. Zum Wickeln wird der Kernträger 2 unter Vakuum gesetzt, so daß der Gummischlauch 8 gleichmäßig über die Zwischenschicht 12 auf dem Kernträger 2 aufliegt.

Die aufzubringende Wicklung besteht beim Ausführungsbeispiel aus einem im wesentlichen zylindrischen Abschnitt A und zwei kegelförmigen oder konischen Abschnitten B, die sich beidseitig an den zylindrischen Abschnitt A anschließen. Der Abschnitt kann auch ein- oder zeiseitig kegelig mit einer geringen Kegelsteigung ausgebildet sein. Die Spreizscheiben 16 sind in einem solchen Abstand von den Enden des zylindrischen Abschnittes A angeordnet, daß die Faserstränge optimal aus der Wicklung im zylindrischen Bereich A in den konischen Bereich übergehen. Die Wicklung wird bei der Ausführungsform nach Fig. 1 ausgehend von zwei zylindrischen Wicklungsköpfen 20 an den Außenseiten der Spreizscheiben 16 gewickelt, wobei auch auf der Außenseite ein kegelförmiger Anstieg der Faserstränge zum Umfang der Spreizscheiben 16 erfolgt. Die Faserstränge werden mit dem Kunstharz getränkt gewickelt.

Nach Fertigstellung der Wicklung, die mehrlagig ausgeführt sein kann und vorzugsweise ist, wird auf den Wickelkörper ein Formwerkzeug 21 aufgesetzt. Dieses Formwerkzeug hat eine Breite b, die der Breite des zylindrischen Abschnittes A entspricht. Das Formwerkzeug 21, das hier zweiteilig mit den beiden Formhälften 22, 24 ausgebildet ist, weist im zusammengesetzten Zustand eine zylindrische Öffnung 26 entsprechend dem gewünschten Außendurchmesser des zylindrischen Abschnittes A des herzustellenden Bauteiles auf, die hier in den beiden Teile 22 und 24 des Formwerkzeuges 21 jeweils in Form von zwei Halbschalen ausgebildet ist.

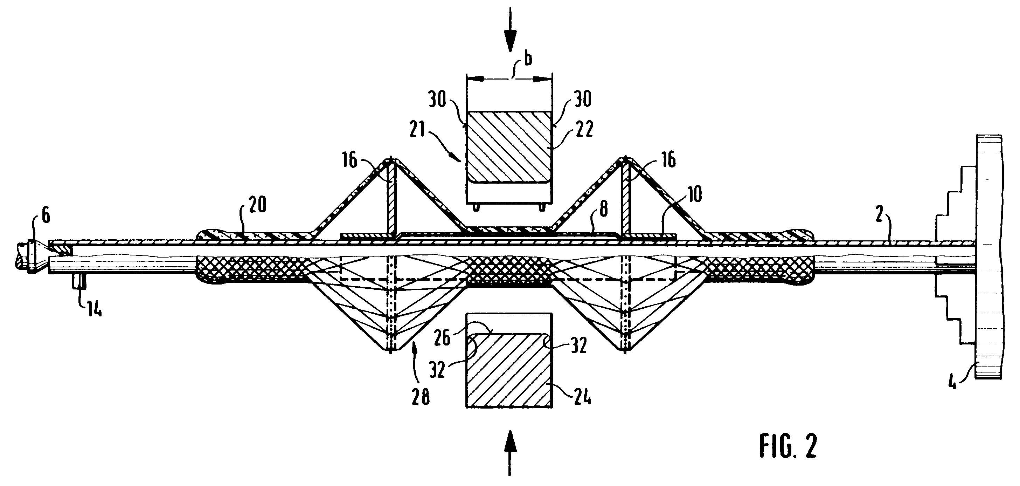

Senkrecht zur Achse der Öffnung 26 an den beiden Enden des Formwerkzeuges 21 angeordnete Flächen 30 bilden Formflächen für die Flansche des Bauteiles, das aus dem Wickelkörper 28 nach Fig. 1 bzw. Fig. 2 zu formen ist. An den Enden der Öffnung 26 sind am Übergang zu den Flächen 30 Übergangsradien 32 ausgebildet.

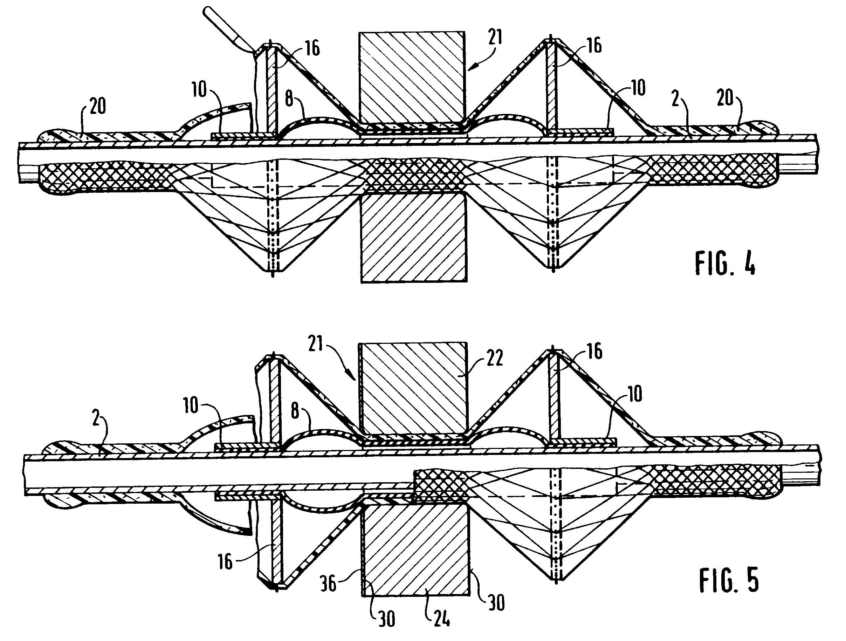

Nach dem Schließen des Formwerkzeuges 21 wird in den Kernträger 2 Druckluft eingelassen bis sich der Gummischlauch 8 im Bereich der konischen Aufweitung der Wicklung etwas aufweitet, wie in Fig. 5 dargestellt. Dabei werden die Faserstränge im Bereich des Übergangsradius 32 gegen das Formwerkzeug angedrückt und gehaltert.

Dabei kommt es gleichzeitig zu einer ersten Verdrängung überschüssigen Harzes aus der Wicklung im Bereich der Übergänge. Gleichzeitig wird damit die Wicklung relativ zum Formwerkzeug 21 fixiert. Es kann jetzt zunächst an einem Ende der konusförmige Teil der Wicklung außerhalb der Spreizscheibe 16 abgetrennt werden, wie in Fig. 4 angedeutet. Die Wicklung wird dann unter Aufweitung des Konus an die angrenzende Stirnfläche 30 des Formwerkzeuges 21 angelegt. Vorher kann auf diese Stirnfläche 30 ein Fasergelege 36 in Form eines Fasergewebes aufgelegt werden, das zur Erhöhung der Schubfestigkeit des zu bildenden Flansches dient.

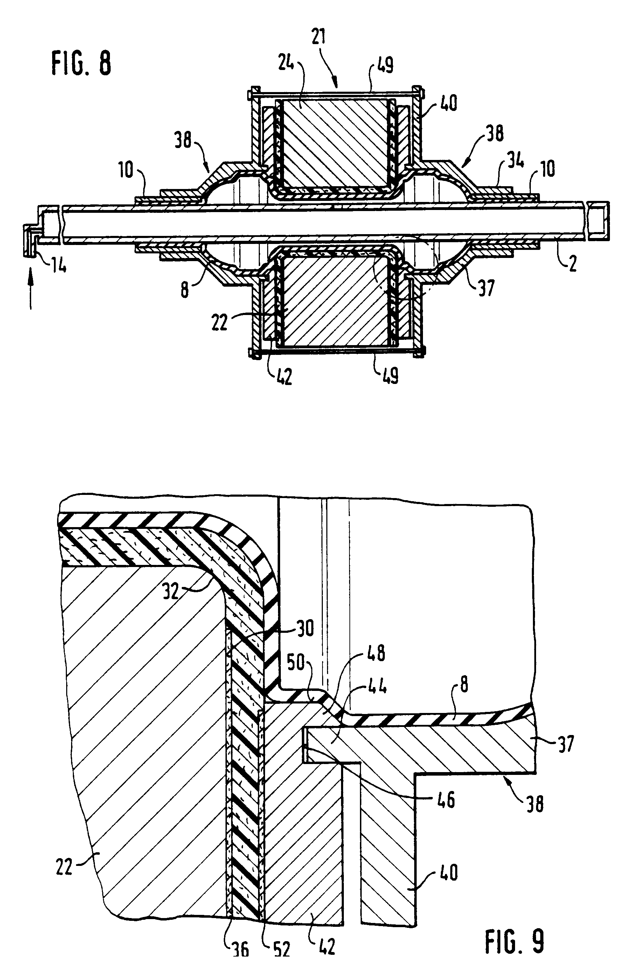

Nach dem Auflegen der zu einer Flanschscheibe aufgeweiteten Wicklung auf die Stirnfläche 30 wird die Spreizscheibe 16 abgenommen, und auf das zylindrische Befestigungselement 10 für den Gummischlauch 8 wird ein Stützwerkzeug 38 aufgesetzt. Dieses Stützwerkzeug ist auf dem Befestigungselement mit einem zylindrischen Abschnitt 34 geführt. Es weist einen glockenartigen Abschnitt 37 auf, an den sich ein Flansch 40 anschließt. Darunter befindet sich ein weiterer Flansch 42, der hier als gesondertes Bauelement mit einer Ringnut 46 ausgebildet ist. In diese Nut 46 greift ein ringförmiger Vorsprung 48 am Stützwerkzeug ein, über das der Flansch 42 axial verschiebbar radial zum Sützwerkzeug 38 geführt ist, wie im einzelnen aus Fig. 9 ersichtlich. Der Flansch 42 hat einen inneren Durchmesser, der größer ist als der Durchmesser der Öffnung des Formwerkzeuges 21 über die Übergangsradien gemessen, und ist an der dem Formwerkzeug zugewandten Seite mit einem vorzugsweise zylindrisch ausgebildeten Bohrung 50 versehen.

Beim Aufweiten der konischen Abschnitte der Wicklung kommt es zu einer Ausdünnung der Faserschicht und damit zu einer Verringerung der Faserschichtdicke. Die radialen Frontflächen des Formwerkzeuges und die Flanschen 42 sind daher mit einer entsprechenden Konizität auszubilden. Es sind weiter im Bereich der im Randbereich des Flanschen vorzusehenden Anschlußbohrung Vertiefungen zur Erhöhung der Flanschdicke im Bereich des Lochkranzes vorzusehen, die die Lochleibungsdrücke aufnehmen können. Hier können falls erforderlich auch zusätzlich ringförmige Gewebelagen als Verstärkung vorgesehen werden.

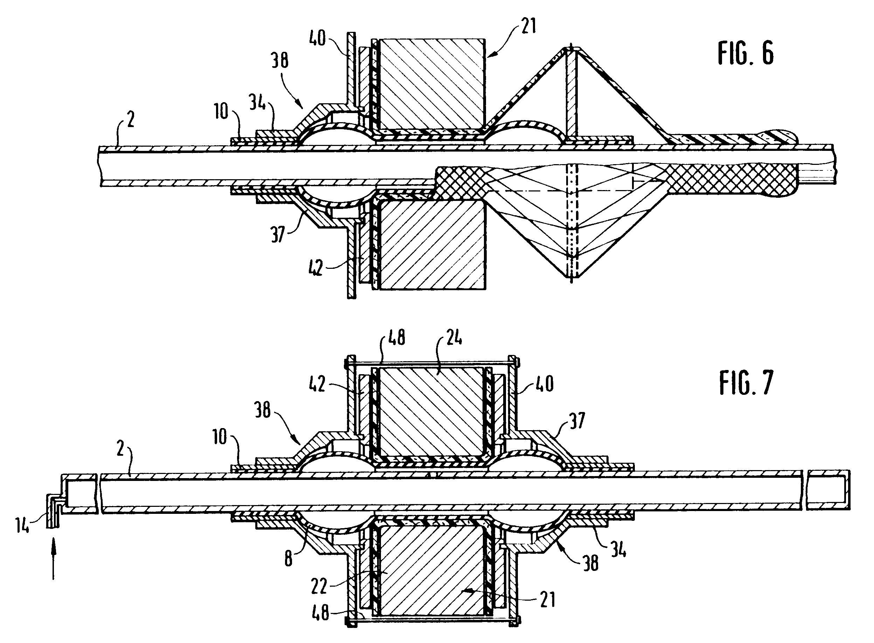

Nach Anbringen des Stützwerkzeuges 21 auf der einen Seite wird ein weiteres Stützwerkzeug 21 auf der anderen Seite aufgebracht. Die beiden Stützwerkzeuge 21 werden dann, wie in Fig. 7 dargestellt, über Spannbolzen 49 gegeneinander verspannt. Die Spannbolzen 49 greifen hierbei an den Flanschen 42 der Stützwerkzeuge an.

Nach dem Verspannen der Stützwerkzeuge wird der Luftdruck innerhalb des Gummischlauches 8 erhöht, so daß sich dieser soweit ausdehnt, daß der glockenförmige Teil des Stützwerkzeuges vollständig ausgefüllt ist. Dabei wird über den Gummischlauch auf die Wicklung im Bereich des Übergangsradius 32 und radial darüber hinaus fortschreitender Druck ausgeübt. Da sich der Gummischlauch hierbei ausgehend von der Situation nach Fig. 5 über die Wicklung im Übergangsradius radial nach auswärts abwälzt, wird die Wicklung in diesem Bereich durch den Gummischlauch fortschreitend unter Druck gesetzt. Somit wird überschüssiges Harz und etwa eingeschlossene Luft radial nach außen verdrängt. Durch die Beweglichkeit des Flansches 42, der über seine Schrägschulter 48 über den Gummischlauch 8 in Achsrichtung druckbelastet ist, wird auch im Bereich des Flansches des Werkstückes Druck erzeugt, durch den überschüssiges Harz und etwa eingeschlossene Luft ausgetrieben werden.

In Fig. 9 ist das oben erwähnte Fasergelege 36 klar erkenntlich. Ein weiteres Fasergelege 52 ist hier auf der Außenseite des Flansches angeordnet. Dieses wird nach dem Anlegen des aufgeweiteten Wicklungskonus gegen die Formflächen 30 auf die Wicklung aufgelegt, bevor das Stützwerkzeug aufgesetzt wird. Für den Drucklufteinlaß 14 ist ein Rückschlagventil vorgesehen, so daß während der anschließenden Aushärtung des Werkstückes der Überdruck im Gummischlauch 8, der die erwähnte Anpressung bewirkt, aufrechterhalten bleibt. Das Werkzeug kann dann in der Form, in der in Fig. 8 dargestellt ist, zur Aushärtung des Kunstharzes in einen Ofen eingebracht werden. Das Werkstück ist mit seiner Kontur in Fig. 8 klar erkennbar.

Nach dem Aushärten und der Entnahme aus dem Werkzeug wird der äußere Umfang der beiden Flanschen beschnitten und mit den notwendigen Anschlußbohrungen versehen.

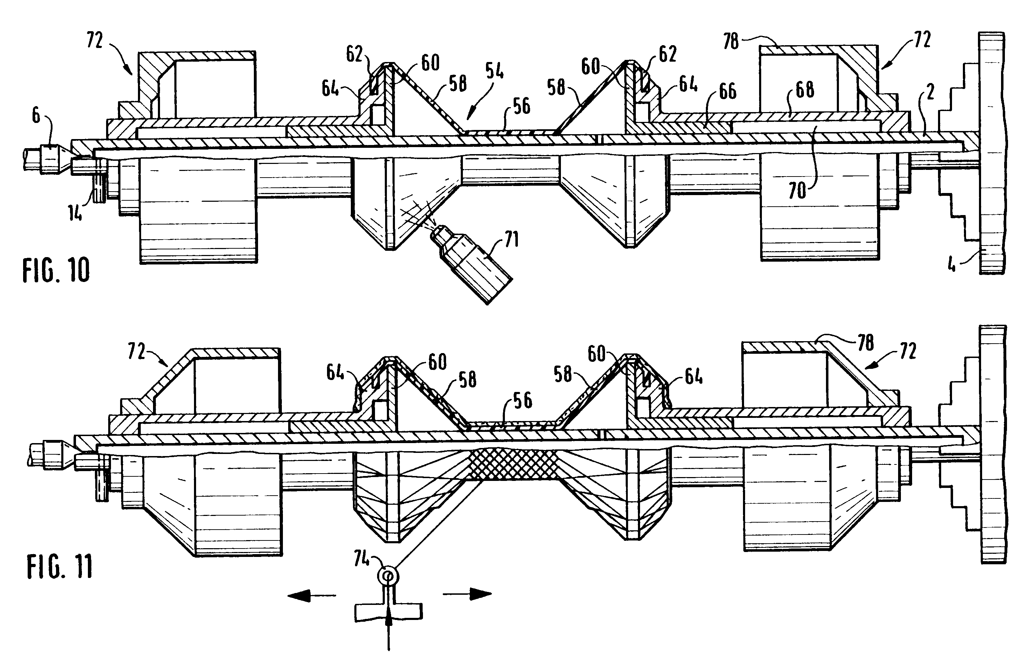

Bei der Ausführungsform nach Fig. 10 ist wiederum ein rohrförmiger Kernträger 2 vorgesehen, der in der oben unter Bezug auf Fig. 1 beschriebenen Weise drehbar und mit einem Druckluftauslaß 14 versehen ist. Der auf dem Kernträger 2 angeordnete Wickelkern 54 besteht wiederum aus einem Elastomer. Er ist als dünnwandiger Rotationskörper ausgebildet mit einem zylindrischen Abschnitt 56 und daran anschließenden konischen Abschnitten 58, die über eine Spreizscheibe 60 geführt und hinter dieser Spreizscheibe mit einem Wulstrand 62 in eine flanschartige Halterung 64 eingehängt sind. Die Spreizscheibe 60 ist hierbei über einen zylindrischen Ansatz 66 auf dem Kernträger 2 gelagert und vorzugsweise axial verschiebbar. Der zylindrische Ansatz 66 ist zwischen dem Außenumfang des Kernträgers 2 und einem axialen Ansatz 68 der Halterung 64 gelagert. Der Zwischenraum 70 ist an den Enden geschlossen und bildet einen ringförmigen Zylinderraum, der mit einem gesonderten nicht dargestellten Druckluftanschluß versehen ist. Auf den zylindrischen Ansätzen 66 sind hier weiter beidseitig glockenförmige Stützwerkzeuge 72 axial verschiebbar gelagert, die, wie weiter unten beschrieben, mit dem Formwerkzeug zusammenwirken.

Zur Herstellung eines Bauelementes mit beidseitig angeformten Flanschen wird auf die Oberfläche der konischen Abschnitte 58 mit Hilfe einer üblichen Faserspritzanlage 71 eine Faserschicht aufgebracht, die der Erhöhung der Schubfestigkeit des fertigen Flansches dient und die damit in ihrer Wirkung dem Fasergelege 52 bei der ersten Ausführungsform entspricht. Auf den so vorbereiteten Wickelkern wird dann, wie in Fig. 11 schematisch dargestellt, in gleicher Weise wie bei der ersten Ausführungsform die Wicklung aufgebracht, die hier bis hinter die Halterung 64 geführt ist. Der Faserstrang wird wiederum mittels Wickelvorrichtung mit einer Fadenführung gelegt, die hier wiederum durch das Fadenauge 74 angedeutet ist.

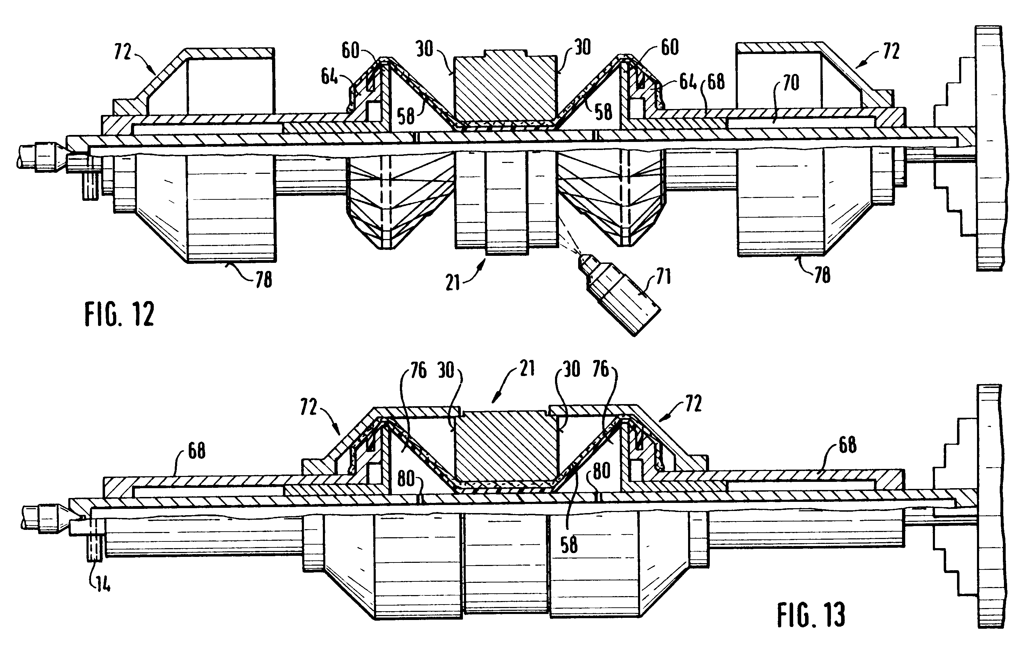

Nach Fertigstellung der Wicklung wird, wie in Fig. 12 dargestellt, das Formwerkzeug 21 über dem zylindrischen Abschnitt der Wicklung geschlossen. Das Formwerkzeug 21 ist hierbei in ähnlicher Weise ausgebildet wie oben unter Bezug auf Fig. 2 beschrieben. Auf die beiden Stirnseiten 30 des Formwerkzeuges 21 wird dann eine weitere Faserschicht über die Faserspritzanlage 71 aufgebracht, die eine Verstärkungsschicht auf der Innenseite der Flansche des Werkstückes bildet ähnlich der Verstärkungsschicht 36, die oben unter Bezug auf Fig. 9 beschrieben ist.

Anschließend werden die beiden glockenförmigen Stützelemente, die in Fig. 11 bis 15 in einer etwas abgewandelten Ausführung dargestellt sind, mit ihrem Glockenmantel 78 über den konischen Abschnitt des Wickelkörpers geschoben, wobei das Formwerkzeug 21 mit den Mantelenden übergriffen wird. Der Innendurchmesser des glockenförmigen Abschnittes 78 entspricht im wesentlichen dem Durchmesser des Wickelkörpers über der Spreizscheibe 60. In den Wickelkernträger 2 wird dann Druckluft eingelassen, die über Bohrungen 80 in den Raum 76 zwischen der Spreizscheibe 60 und den konischen Abschnitten 58 des Wickelkernträgers 2 eintritt. Durch die Druckluft wird der elastische dünnwandige Konus 58 mit dem darauf liegenden konischen Wicklungsabschnitt verformt und in Anlage an den stirnseitigen Formflächen 30 des Formwerkzeuges 21 gedrückt. Dabei erfolgt eine fortlaufende Pressung beginnend mit dem Abschnitt an den Übergangsradien an den beiden Enden der Öffnung des Formwerkzeuges, die sich dann fortsetzt bis zum äußeren Umfang der Formflächen 30. Auf diese Weise erfolgt eine von der Öffnung im Formwerkzeug aus fortschreitende Auspressung des überschüssigen Harzes sowie etwaiger Lufteinschlüsse.

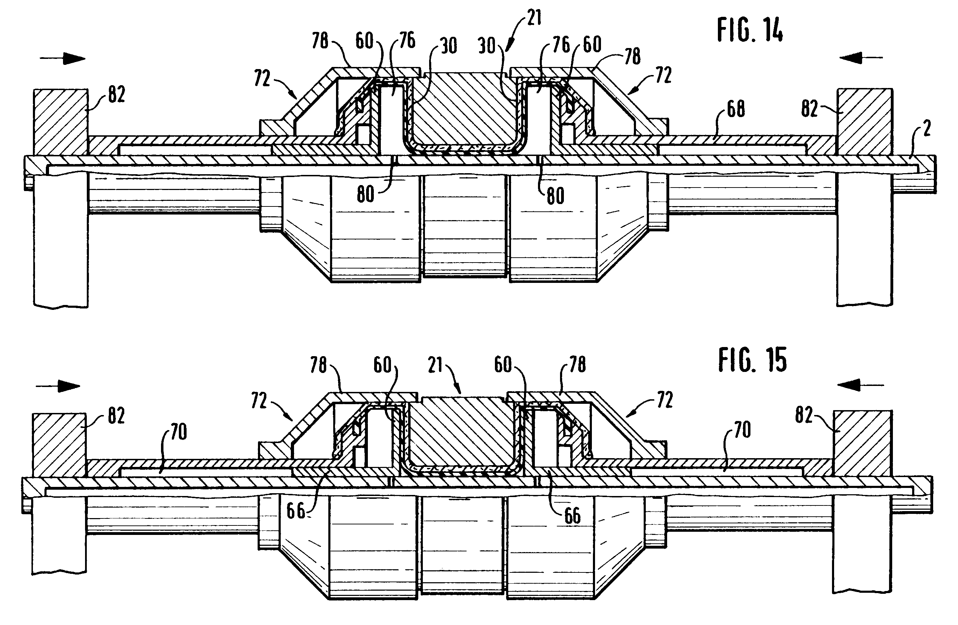

Durch die axiale Verschiebbarkeit der Spreizscheiben 60 können diese durch Einlaß von Druckluft in den ringförmigen Zylinderraum 70 gegen das Formwerkzeug 21 verschoben werden, bis sie zur Anlage an der Außenseite der Flansche gelangen und hier eine Nachverdichtung der Flanschflächen bewirken. Es kann aber unter Umständen auch auf eine axiale Verschiebbarkeit der Spreizscheiben verzichtet werden. Die Spreizscheiben können dann mit der Halterung 64 ein Bauteil bilden. Die in Fig. 14 bzw. 15 dargestellte Anordnung wird dann in einen Ofen gegeben, in dem die Aushärtung des Kunstharzes erfolgt.

Das Werkzeug kann nach Fertigstellung der Wicklung aus der Wickelmaschine herausgenommen und für die weiteren Bearbeitungsschritte, die in Fig. 12 bis 15 dargestellt sind, in eine gesonderte Tragvorrichtung eingehängt werden, die in Fig. 14 und 15 wiedergegeben ist. Diese Tragvorrichtung weist zwei Widerlager 82 auf, gegen die hier der zylindrische Aufsatz 68 der Halterung 64 abgestützt ist und von dem die Reaktionskraft beim Einführen der Druckluft in den Raum 76 aufgenommen wird ebenso wie die Reaktionskraft beim Verschieben der Stützplatte 80 durch Einführen von Druckluft in den Ringzylinderraum 70. Die beiden Widerlager 82 können gleichzeitig Stützen eines Trägers sein, mit dem das Werkzeug mit dem Werkstück in den Ofen eingeführt wird.

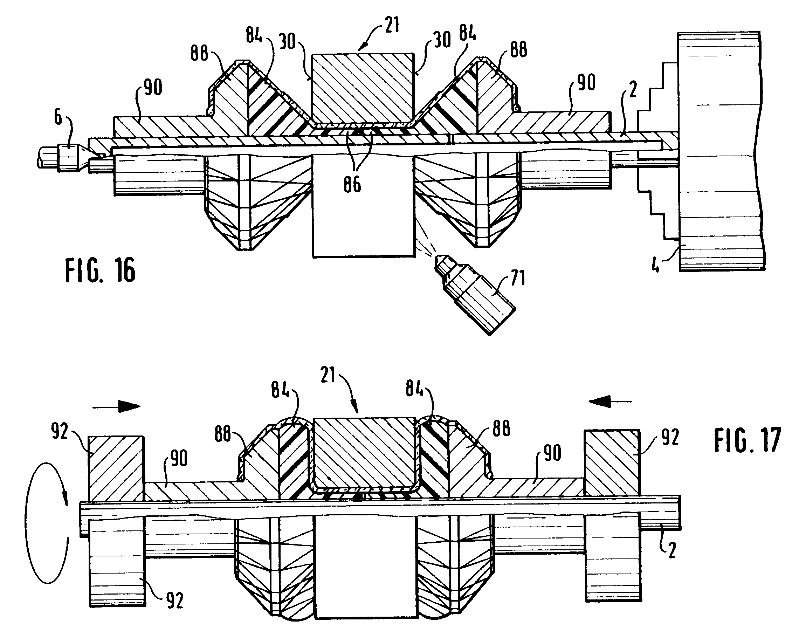

Bei der dritten Ausführungsform, die in Fig. 16 dargestellt ist, besteht der auf den Kernträger 2 aufgebrachte Wickelkern aus zwei konischen Abschnitten 84 mit anschließenden zylindrischen Abschnitten 86, die hier in der Mitte des zylindrischen Abschnittes gegeneinanderstoßen. Die konischen Abschnitte 84 liegen an Flanschen 88 an, die auf ihrem äußeren Umfang die Funktion der Spreizscheiben haben. Die Wicklung ist hier wiederum über den Umfang der Flansche 88 gewickelt. Die Flansche 88 sind über zylindrische Abschnitte 90 auf dem Kernträger 2 axial verschiebbar gelagert. Es kann dabei zur axialen Verschiebung wiederum ein Zylinderraum vorgesehen werden. Es kann aber auch eine äußere Preßvorrichtung vorgesehen werden, in die das Werkzeug nach Fertigstellung der Wicklung mit dem Kernträger 2 eingesetzt wird.

Die Wicklung wird in gleicher Weise aufgebracht wie sie oben insbesondere unter Bezug auf die Ausführungsform nach Fig. 10 bis 15 beschrieben ist. Nach Aufbringen der Faserschicht auf den Stirnseiten 30 des Formwerkzeuges 21, die als Verfahrensgang in Fig. 16 dargestellt ist, wird das Formwerkzeug eingesetzt. Anschließend werden die Flansche mit den zylindrischen Ansätzen 90 gegen die stirnseitigen Formflächen 30 des Formwerkzeuges 21 bewegt. Dabei werden die konusförmigen Abschnitte 84 des Wickelkerns verformt bis im Endstadium dieser Verformung die konischen Wicklungsabschnitte entsprechend radial aufgeweitet sind und gegen die axialen Formflächen 30 des Formwerkzeuges 21 anliegen. Auch hierbei erfolgt bei der Verformung der elastischen Konen 84 eine fortschreitende Verdichtung der Wicklung ausgehend vom inneren Umfang der Flansche zum Außenumfang hin, wodurch wiederum überschüssiges Harz ausgepreßt und vorhandene Luft ausgetrieben wird. Durch die elastischen Konen wird eine gleichmäßige Anpressung gegen das Werkzeug bewirkt und dabei die Wicklung im Flanschbereich verdichtet.

Bei der Form nach Fig. 16 und 17 handelt es sich um eine offene Form. Um ein Auslaufen des Kunstharzes zu vermeiden, muß das Werkzeug mit dem Wickelkörper bei der Axialpressung um die Achse des Kernträgers 2 gedreht werden. Die Drehung ist auch anschließend während es Aushärtens fortzusetzen. Zu diesem Zweck können auf die Enden des Wicklungsträgers 2 Rollscheiben 92 aufgesteckt werden, die darauf arretierbar sind und mit denen das Werkzeug dann auf einem Rollgang durch einen Wärmeofen hindurchgeführt werden kann.

Das Werkzeug in der Auführungsform nach Fig. 16 und 17 zeichnet sich durch die Einfachheit seines Aufbaus aus und ist insbesondere für die Serienfertigung geeignet.

Der axiale Abstand der Flanschscheiben des Werkstückes, das ist die axiale Länge der zylindrischen Abschnitte, kann je nach den Anforderungen unterschiedlich sein. Bei größeren axialen Längen kann zwischen den Enden der zylindrischen Ansätze 86 der Elastomerkegel 84 ein gesonderter rohrförmiger Wickelabschnitt vorgesehen sein, der gleichfalls vorzugsweise aus einem Elastomer besteht.

Bei der Ausführungsform nach Fig. 16 und 17 kann auf einem Kernträger auch eine Mehrzahl von Wickelkernen in Achsrichtung hintereinander vorgesehen werden. Es können dabei für mittlere Wickelkerne an einem Flansch geringer Dicke beidseitig konische Wickelkernabschnitte mit ihrer Basis anliegen, während die außen liegenden Flansche in der dargestellten Weise ausgebildet sein können. Mit einem derartigen Mehrfachwickelkern können die Wicklungen für alle Werkstücke in einem Durchgang aufgebracht werden. Die Verformung gemäß Fig. 17 kann mit einem Preßvorgang durchgeführt werden. Ein zusätzlicher Vorteil liegt in der Verringerung des anfallenden Abfalls.

Werkstücke, die in der beschriebenen Weise mit zwei Flanschen dargestellt sind, können auch in der Mitte des zylindrischen Abschnittes getrennt werden und dann als Anschlußflansche mit einem Verbindungsrohr entsprechender Länge verklebt werden.

In der beschriebenen Weise hergestellte Werkstücke zeichnen sich durch einen definierten Faserverlauf im Flanschbereich aus und weiter dadurch, daß der Übergang vom zylindrischen Abschnitt in den Flansch ohne Aufdickung möglich ist. Die Werkstücke haben eine hohe Standzeit bei Biegewechselbelastungen, wie sie insbesondere bei Ausgleichskupplungen auftreten, und sind dabei insbesondere auch für Wellen mit Kardangelenken einsetzbar.

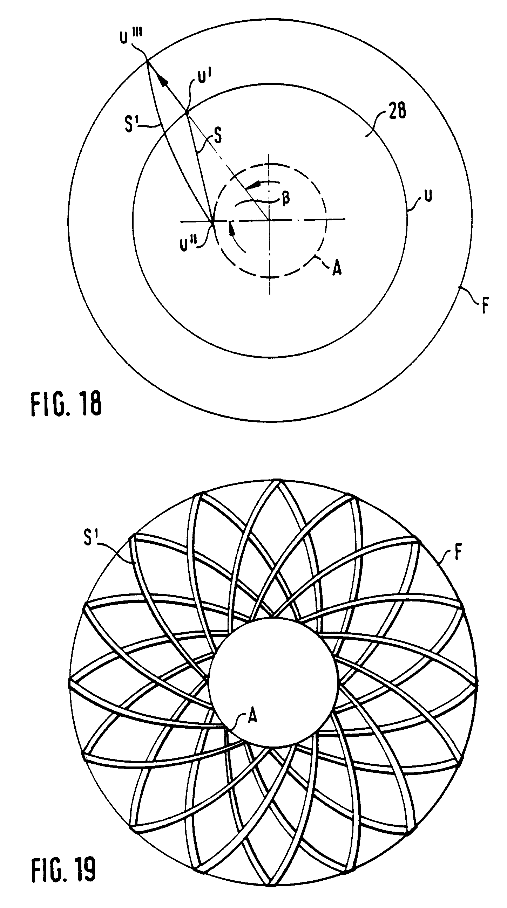

Der Faserverlauf beim Wickeln und dessen Verlagerung beim Aufweiten des Wickelkegels ist in Fig. 18 schematisch dargestellt.

Das Ende des zylindrischen Abschnittes A ist in Fig. 18 gestrichelt dargestellt. Dieses ist gleichzeitig die Spitze des Wickelkegels 28, das ist des kegelförmigen Abschnittes der Wicklung, der über den Spreizscheiben 16 einen größten Durchmesser hat, der hier durch die Umfangslinie U wiedergegeben ist.

Die Faser bzw. der Faserstrang S wird beim Wickeln vom zylindrischen Abschnitt A der Wicklung tangential in den konischen Abschnitt der Wicklung übergeführt, und zwar mit einem Steigungswinkel β in der Projektion von ≈ 5° gegen den Radius gemessen. Die Faser erreicht damit den Konusumfang U am Konusfuß an dem Punkt u'. Die Faser verläuft zwischen dem Fußpunkt u'' und dem Punkt u' am Umfang U des Kegels geradlinig. Der Kupplungsflansch F ist mit seinem Umfang dargestellt. Beim Aufweiten des konischen Teiles der Wicklung und deren Ablegen in der Flanschebene bewegt sich das Faserende u' radial zum Punkt u''' auf dem Umfang des Flansches. Der Faserstrang wird dabei in Form eines Bogens S' abgelegt.

Der Faserverlauf ist in Fig. 19 noch einmal für die gesamte Flanschfläche dargestellt. Wie aus Fig. 19 ersichtlich, kommt es bei der Aufweitung des konusförmigen Abschnitts der Wicklung zu einer Ausdünnung des Faseranteils zum äußeren Umfang des Flansches F hin. Diese Ausdünnung ist ein erwünschter Effekt, da dadurch die Flanschdicke über den Radius kontinuierlich herabgesetzt werden kann, ohne daß damit eine Verringerung der übertragbaren Schubspannungen verbunden wäre. So kommt es in dem für die Ausgleichswirkung des beschriebenen Bauelementes wesentlichen äußeren Flanschbereich zu einer geringeren Verformungsarbeit und damit zu einer geringeren Wärmeentwicklung, die von der Verformungsarbeit abhängig ist. Weiter nimmt der Momentenverlauf nach außen ab, dadurch kommt es zu einer gleichmäßigen Beanspruchung über die Flanschfläche.

Der Verlauf der Fasern im aufgeweiteten Zustand, d.h. im fertigen Flansch kann bei den Ausführungsformen nach Fig. 10 bis 15 bzw. 16 bis 18 dadurch beeinflußt werden, daß die Kerne in ihrem konischen Bereich, in dem die Fasern auf dem Kern aufliegen, nicht mit einer Kegelfläche ausgebildet sind, wie in den Zeichnungen dargestellt, sondern diese Mantelflächen gebaucht ausgeführt sind, wodurch es dann zu einer gekrümmten Ablage der Fasern über den bauchigen Konusbereich kommt, die ihrerseits wiederum den Faserverlauf im aufgeweiteten Bereich beeinflußt dahingehend, daß die Fasern nach dem Aufweiten des konischen Wicklungsbereiches einen weniger gekrümmten Verlauf erhalten.

## Patentansprüche

1. Verfahren zur Herstellung von Bauelementen aus Faserverbundwerkstoffen, die einen rohrförmigen Bereich und daran anschließend wenigstens einen planen Flansch aufweisen, wobei
auf einem die Innenkontur des rohrförmigen Bereichs bestimmenden Kern (2, 8) eine Wicklung (A, B) mit sich unter einem Winkel zur Achse des Kerns kreuzenden Fasersträngen aufgebracht wird, die an den Enden des rohrförmigen Bereiches unter konischer Erweiterung über einen davon im Abstand liegenden Spreizkörper (16) geführt werden,
auf die fertige Wicklung ein Formwerkzeug (21) aufgesetzt wird, das mit einer die Innenseite des Flansches bestimmenden Stirnseite (30) versehen ist, und
der konische Bereich (B) der Wicklung unter Aufweitung gegen die Stirnseite des Formwerkzeuges angelegt und angepreßt wird,
dadurch gekennzeichnet,
daß die Wicklung beidseitig des rohrförmigen Bereichs (A) jeweils über einen Spreizkörper (16) gewickelt wird,
daß nach Fertigstellung der Wicklung auf den rohrförmigen Bereich der Wicklung ein Formwerkzeug (21) aufgesetzt wird, das den rohrförmigen Bereich umfaßt und beidseitig mit einer die Innenseite der Flanschen bestimmenden Stirnseite (30) mit einer gerundeten Kante (32) zwischen dem rohrförmigen Bereich (26) und den Stirnseiten (30) versehen ist, und
daß die konischen Bereiche (B) der Wicklung vor dem Anlegen an die Stirnseite der Form wenigstens im Bereich der gerundeten Kante (32) unter Druck durch ein elastisches Medium (8) zur Anlage an den Stirnseiten des Formwerkzeuges gebracht wird.

2. Verfahren nach Anspruch 1, dadurch gekennzeichnet, daß im Bereich der Flanschen des Bauelementes beidseitig Fasergelege (36, 52) zur Erhöhung der Schubfestigkeit aufgelegt werden.

3. Verfahren nach Anspruch 2, dadurch gekennzeichnet, daß als Fasergelege (36, 52) Fasergewebe verwendet werden, von denen das eine vor dem Aufweiten des konischen Wicklungsteils (B) auf die Stirnseite (30) des Formwerkzeuges (21) und das andere nach dem Aufweiten des Wicklungskonus auf diese Faserwicklung aufgelegt wird.

4. Verfahren nach Anspruch 2, dadurch gekennzeichnet, daß die Fasergelege in Form von aufgespritzten Stapelfasern (71) aufgebracht werden.

5. Vorrichtung zur Herstellung von Bauelementen aus Faserverbundwerkstoffen, die einen rohrförmigen Bereich und daran anschließend wenigstens einen planen Flansch aufweisen mit einem zylindrischen Wickelkern für die Wicklung des rohrförmigen Abschnittes und wenigstens einer mit dem Wickelkern koaxialen runden Spreizscheibe für die Wicklung des Flansches mit einem Durchmesser größer als der Durchmesser des Wickelkerns
gekennzeichnet durch
einen Wickelkernträger (2), der als geschlossenes Rohr mit einem Druckluftanschluß (14) und einer im mittleren Bereich angeordneten Öffnung (15) ausgebildet ist,
einen auf den Wickelkernträger aufgezogenen aufblasbaren Schlauch (8) als Wicklungsträger, der an seinen Enden durch den Schlauch umgreifende ringförmige Befestigungselemente (10) dichtend in Anlage an dem Wickelkernträger gehalten wird,
zwei im Abstand voneinander lösbar auf den Befestigungselementen (10) angeordnete Spreizscheiben (16) für die Wicklungsabschnitte für die Flansche und
ein zweiteiliges Formwerkzeug (21) für den zylindrischen Abschnitt des Bauelementes mit radialen Teilungsflächen, einer zylindrischen Innenkontur (26), senkrecht zur Achse liegenden Stirnflächen (30) und gerundeten Übergängen (32) zwischen Stirnflächen und der Innenkontur.

6. Vorrichtung nach Anspruch 5, gekennzeichnet durch
auf die ringförmigen Befestigungselemente (10) aufschiebbare Stützwerkzeuge (38), die an ihrem den angrenzenden aufblasbaren Abschnitt des Schlauches (8) übergreifenden Ende glockenartig ausgebildet und an ihrem offenen Ende mit einem Spannflansch (40) versehen ist, über den die beiden gegenüberliegenden Stützwerkzeuge gegen das Formwerkzeug (21) verspannbar sind, und die einen am Stützwerkzeug axial verschiebbar geführten Flansch (42) aufweisen, der einen Innendurchmesser hat, der größer ist als der Durchmesser der Innenkontur (26) des Formwerkzeuges (21) für den zylindrischen Abschnitt des Bauelementes zuzüglich dem doppelten Radius der gerundeten Kante (32) des Formwerkzeuges, aber kleiner ist als der Innendurchmesser des Stützwerkzeuges an seinem dem Flansch (42) zugewandten Ende.

7. Vorrichtung zur Herstellung von Bauelementen aus Faserverbundwerkstoffen, die einen rohrförmigen Bereich und daran anschließend wenigstens einen planen Flansch aufweisen mit einem zylindrischen Wickelkern für die Wicklung des rohrförmigen Abschnittes und wenigstens eine mit dem Wickelkern koaxiale runde Spreizscheibe für die Wicklung des Flansches mit einem Durchmesser größer als der Durchmesser des Wickelkerns,
gekennzeichnet durch
einen Wickelkernträger (2), der als geschlossenes Rohr mit einem Druckluftanschluß (14) und einer im mittleren Bereich angeordneten Öffnung (15) ausgebildet ist,
einen auf dem Wickelkernträger angeordneten dünnwandigen, elastischen Wickelkern, der einen rohrförmigen Teil (56) und daran anschließend beidseitig einen konusförmigen Abschnitt (58) aufweist,
feststehende scheibenförmige Körper (64) mit einer Haltenut für den freien Rand am Ende des konischen Abschnittes des Wickelkerns,
ein zweiteiliges Formwerkzeug (21) für den zylindrischen Abschnitt des Bauelementes mit radialen Teilungsflächen, einer zylindrischen Innenkontur (26), senkrecht zur Achse liegenden Stirnflächen (30) und gerundeten Übergängen (32) zwischen Stirnflächen und der Innenkontur,
vor den einander zugewandten Stirnseiten der scheibenförmigen Körper (64) angeordnete Spreizscheiben (60), die in Richtung auf die Stirnseiten (30) des Formwerkzeuges (21) verschiebbar sind,
die Anordnung von Öffnungen in dem Wickelkernträger im Bereich der konusförmigen Abschnitte (58) des Wickelkerns und
mit dem Formwerkzeug (21) zusammenwirkende Stützwerkzeuge (76) mit welchen jeweils der Raum zwischen der äußeren Oberfläche der konischen Abschnitte des elastischen Wickelkerns und den Stirnseiten (30) des Formwerkzeuges (21) abdeckbar ist.

8. Vorrichtung nach Anspruch 7, dadurch gekennzeichnet, daß das Stützwerkzeug (72) glockenartig ausgebildet und auf dem Wickelkernträger (2) in Achsrichtung verschiebbar angeordnet ist.

9. Vorrichtung nach Anspruch 7, dadurch gekennzeichnet, daß die konusförmigen Abschnitte (58) des Wickelkerns gebaucht ausgebildet sind.

10. Vorrichtung zur Herstellung von Bauelementen aus Faserverbundwerkstoffen, die einen rohrförmigen Bereich und daran anschließend wenigstens einen planen Flansch aufweisen mit einem zylindrischen Wickelkern für die Wicklung des rohrförmigen Abschnittes und wenigstens eine mit dem Wickelkern koaxiale runde Spreizscheibe für die Wicklung des Flansches mit einem Durchmesser größer als der Durchmesser des Wickelkerns,
gekennzeichnet durch
einen zylindrischen Wickelkernträger (2),
einen auf dem Wickelkernträger angeordneten Wickelkern mit zwei konusförmigen Abschnitten (84) aus einem elastischen Vollmaterial, die mit rohrförmigen Ansätzen (86) versehen sind, die sich in den Wickelbereich für den rohrförmigen Abschnitt des Bauelementes hinein erstrecken,
ein zweiteiliges Formwerkzeug (21) für den zylindrischen Abschnitt des Bauelementes mit radialen Teilungsflächen, einer zylindrischen Innenkontur (26), senkrecht zur Achse liegenden Stirnflächen (30) und gerundeten Übergängen (32) zwischen Stirnflächen und der Innenkontur,
runde Spreizscheiben (88), die in Achsrichtung auf das Formwerkzeug (21) verschiebbar sind und an denen die kegelförmigen Abschnitte des Wickelkerns mit ihrer Basis anliegen,
Arretierungen (92), mit denen die Spreizscheiben in der Stellung arretierbar sind, die von ihnen nach dem Verformen der konusförmigen Abschnitte des Wickelkerns bis zur flächigen Anlage an den Stirnseiten (30) des Formwerkzeuges (21) erreicht ist.

11. Vorrichtung nach Anspruch 9, dadurch gekennzeichnet, daß auf die Enden des Wickelkernträgers (2) aufsetzbare Räder (92) als Arretierungen vorgesehen sind.

12. Vorrichtung nach Anspruch 10, dadurch gekennzeichnet, daß die konusförmigen Abschnitte (84) des Wickelkerns gebaucht ausgebildet sind.

## Claims

1. Process for manufacturing structural members made of fibre composites and having a tubular region adjoined by at least one plane flange, wherein
on a core (2, 8) determining the inner contour of the tubular region a winding (A, B) is applied comprising fibre strands which cross one another at an angle to the axis of the core and are conveyed at the ends of the tubular region with conical widening over a spreader element (16) lying at a distance therefrom,
upon the finished winding a form tool (21) is placed, which is provided with a face (30) determining the inside of the flange, and
the conical region (B) of the winding is, with simultaneous widening, applied and pressed against the face of the form tool,
characterized in that
the winding on either side of the tubular region (A) is wound over a spreader element (16),
that on completion of the winding, there is placed onto the tubular region of the winding a form tool (21), which embraces the tubular region and is provided at both ends with a face (30) determining the inside of the flanges and having a rounded edge (32) between the tubular region (26) and the faces (30), and
that the conical regions (B) of the winding, prior to being applied against the face of the mould, are at least in the region of the rounded edge (32) brought under pressure by means of an elastic medium (8) to lie against the faces of the form tool.

2. Process according to claim 1, characterized in that in the region of the flanges of the structural member fibre layers (36, 52) are applied on both sides to increase the shear strength.

3. Process according to claim 2, characterized in that, as fibre layers (36, 52), fibrous tissues are used, of which one is applied onto the face (30) of the form tool (21) prior to widening of the conical winding part (B) and the other is applied after widening of the winding cone onto said fibre winding.

4. Process according to claim 2, characterized in that the fibre layers are applied in the form of sprayed-on staple fibres (71).

5. Device for manufacturing structural members made of fibre composites and having a tubular region adjoined by at least one plane flange, having a cylindrical winding core for winding of the tubular portion and, disposed coaxially with the winding core, at least one circular spreader disk for winding of the flange having a diameter greater than the diameter of the winding core,
characterized by
a winding core carrier (2) in the form of a closed pipe, having a compressed-air connection (14) and an opening (15) disposed in the middle region,
an inflatable tube (8) drawn onto the winding core carrier as a winding carrier, which at its ends is held sealingly applied against the winding core carrier by annular fastening elements (10) which embrace the tube,
two spreader disks (16) for the winding portions for the flanges, which disks are disposed at a distance from one another detachably on the fastening elements (10), and
a two-piece form tool (21) for the cylindrical portion of the structural member, having radial partition surfaces, a cylindrical inner contour (26), faces (30) lying at right angles to the axis and rounded transitions (32) between faces and the inner contour.

6. Device according to claim 5, characterized by
support tools (38) which are slidable onto the annular fastening elements (10), at their end overlapping the adjacent inflatable portion of the tube (8) are bell-shaped and at their open end are provided with a clamping flange (40), by means of which the two opposing support tools are braceable towards the form tool (21), and have a flange (42) which is guided in an axially displaceable manner on the support tool and has an inside diameter, which is greater than the diameter of the inner contour (26) of the form tool (21) for the cylindrical portion of the structural member plus twice the radius of the rounded edge (32) of the form tool but is smaller than the inside diameter of the support tool at its end facing the flange (42).

7. Device for manufacturing structural members made of fibre composites and having a tubular region adjoined by at least one plane flange, having a cylindrical winding core for winding of the tubular portion and, disposed coaxially with the winding core, at least one circular spreader disk for winding of the flange having a diameter greater than the diameter of the winding core,
characterized by
a winding core carrier (2) in the form of a closed pipe, having a compressed-air connection (14) and an opening (15) disposed in the middle region,
a thin-walled, resilient winding core which is disposed on the winding core carrier and has a tubular part (56) adjoined on either side by a conical portion (58),
stationary, disk-shaped elements (64) having a retaining groove for the free edge at the end of the conical portion of the winding core,
a two-piece form tool (21) for the cylindrical portion of the structural member, having radial partition surfaces, a cylindrical inner contour (26), faces (30) lying at right angles to the axis and rounded transitions (32) between faces and the inner contour,
spreader disks (60) which are disposed in front of the opposing faces of the disk-shaped elements (64) and are displaceable in the direction of the faces (30) of the form tool (21),
the arrangement of openings in the winding core carrier in the region of the conical portions (58) of the winding core and
support tools (76), which cooperate with the form tool (21) and by means of each of which the space between the outer surface of the conical portions of the resilient winding core and the faces (30) of the form tool (21) may be covered.

8. Device according to claim 7, characterized in that the support tool (72) is bell-shaped and is disposed in an axially displaceable manner on the winding core carrier (2).

9. Device according to claim 7, characterized in that the conical portions (58) of the winding core are convex.

10. Device for manufacturing structural members made of fibre composites and having a tubular region adjoined by at least one plane flange, having a cylindrical winding core for winding of the tubular portion and, disposed coaxially with the winding core, at least one circular spreader disk for winding of the flange having a diameter greater than the diameter of the winding core,
characterized by
a cylindrical winding core carrier (2),
a winding core disposed on the winding core carrier and having two conical portions (84) made of a resilient solid material, which are provided with tubular attachments (86) extending into the winding region for the tubular portion of the structural member,
a two-piece form tool (21) for the cylindrical portion of the structural member, having radial partition surfaces, a cylindrical inner contour (26), faces (30) lying at right angles to the axis and rounded transitions (32) between faces and the inner contour,
circular spreader disks (88), which are axially displaceable towards the form tool (21) and against which the conical portions of the winding core are applied by their base,
locking means (92), by means of which the spreader disks are lockable in the position which they reach after deformation of the conical portions of the winding core up to surface contact with the faces (30) of the form tool (21).

11. Device according to claim 9, characterized in that wheels (92) which may be placed onto the ends of the winding core carrier (2) are provided as locking means.

12. Device according to claim 10, characterized in that the conical portions (84) of the winding core are convex.

## Revendications

1. Procédé de fabrication d'éléments de construction en matériau composite à base de fibres, présentant une zone tubulaire et, s'y raccordant, au moins une bride plane,
un enroulement (A, B), avec des tronçons de fibres se croisant en faisant un angle déterminé par rapport à l'axe du noyau, étant appliqué sur un noyau (2, 8) définissant le contour intérieur de la zone tubulaire, les tronçons de fibres étant guidés aux extrémités de la zone tubulaire en constituant un agrandissement conique, par des corps d'écartement (16) en étant espacés,
un outil de formage (21), pourvu d'une face frontale (30) déterminant la face intérieure de la bride étant appliqué sur l'enroulement terminé, et
la zone conique (B) de l'enroulement étant appliquée et pressée, avec production d'un agrandissement, contre la face frontale de l'outil de formage,
caractérisé en ce que l'enroulement est enroulé de part et d'autre de la zone tubulaire (A), chaque fois sur un corps d'écartement (16),
en ce qu'après fabrication de l'enroulement sur la zone tubulaire de l'enroulement est appliqué un outil de formage (21) qui entoure la zone tubulaire et est pourvu de part et d'autre d'une face frontale (30), définissant la face intérieure des brides, avec une arête (32) arrondie entre la zone tubulaire (26) et les faces frontales (30), et
en ce que les zones coniques (B) de l'enroulement sont placées, sous pression, avant application sur la face frontale de la forme au moins dans la zone de l'arête (32) arrondie, au moyen d'un fluide (8) élastique, en appui sur les faces frontales de l'outil de formage.

2. Procédé selon la revendication 1, caractérisé en ce que des couches de fibres (36, 52) sont appliquées dans la zone des brides d'éléments de construction, de part et d'autre, en vue d'augmenter la résistance au cisaillement.

3. Procédé selon la revendication 2, caractérisé en ce qu'on utilise comme couches de fibres (36, 52) des tissus de fibres, dont l'un est appliqué avant agrandissement de la partie d'enroulement conique (B) sur la face frontale (30) de l'outil de formage (21) et l'autre est appliqué après agrandissement du cône d'enroulement sur cette enroulement de fibres.

4. Procédé selon la revendication 2, caractérisé en ce que les couches de fibres sont appliquées sous forme de fibres discontinues (71) appliquées par pulvérisation.

5. Dispositif de fabrication d'éléments de construction en matériau composite à base de fibres, présentant une zone tubulaire et au moins une bride plane s'y raccordant, avec un noyau d'enroulement cylindrique pour l'enroulement de la partie tubulaire et au moins un disque d'écartement rond, coaxial au noyau d'enroulement, pour l'enroulement de la bride, ayant un diamètre supérieur au diamètre du noyau d'enroulement,
caractérisé par
un support de noyau d'enroulement (2), réalisé sous forme de tube fermé avec un raccordement d'air comprimé (14) et une ouverture (15) disposée dans la zone médiane, un tuyau (8) dilatable par gonflage, enfilé sur le support de noyau d'enroulement, faisant office de support d'enroulement, maintenu en appui étanché sur le support de noyau d'enroulement, à ses extrémités, au moyen d'éléments de fixation (10) annulaires entourant le tuyau,
deux disques d'écartement (16) désolidarisables l'un de l'autre, disposés à distance sur les éléments de fixation (10), pour les sections d'enroulement destinées aux brides, et
un outil de formage (21) en deux parties pour la section cylindrique de l'élément de construction, avec des surfaces de division radiales, un contour intérieur cylindrique (26), des faces frontales (30), perpendiculaires par rapport à l'axe, et des transitions (32) arrondies entre les faces frontales et le contour intérieur.

6. Dispositif selon la revendication 5, caractérisé par des outils d'appui (38) enfilables sur les éléments de fixation (10) annulaires et réalisés en forme de cloche à leur extrémité entourant la section dilatable par gonflage, limitrophe du tuyau (8), et pourvus, à leur extrémité ouvertes, d'une bride de serrage (40), par l'intermédiaire de laquelle les deux outils d'appui placés en regard l'un de l'autre peuvent être serrés contre l'outil de formage (21) et présentant une bride (42) guidée coulissante axialement sur l'outil d'appui et ayant un diamètre intérieur supérieur au diamètre du contour intérieur (26) de l'outil de formage (21) destiné à la section cylindrique de l'élément de construction, au niveau du double rayon d'arête arrondie (32), mais inférieur au diamètre intérieur des outils d'appui, à leur extrémité tournée vers la bride (42).

7. Dispositif de fabrication d'éléments de construction en matériau composite à base de fibres, présentant une zone tubulaire et, s'y raccordant, au moins une bride plane avec un noyau d'enroulement cylindrique pour l'enroulement de la section tubulaire et, au moins, un disque d'écartement rond, coaxial par rapport au noyau d'enroulement, pour l'enroulement de la bride, avec un diamètre supérieur au diamètre du noyau d'enroulement,
caractérisé par
un support de noyau d'enroulement (2), réalisé sous forme de tube fermé avec un raccordement d'air comprimé (14) et une ouverture (15) disposée dans la partie médiane,
un noyau d'enroulement élastique, à paroi mince, disposé sur le support de noyau d'enroulement et présentant une partie tubulaire (56) et, s'y raccordant, de part et d'autre, une section (58) conique,
un corps (64) discoïde fixe, avec une gorge de maintien pour le bord libre, à une extrémité de la section conique du noyau d'enroulement,
un outil de formage (21) en deux parties pour la partie cylindrique de l'élément de construction portant des surfaces de division radiale, un contour intérieur cylindrique (26), des surfaces frontales (30) perpendiculaires par rapport à l'axe et des transitions arrondies (32) entre les faces frontales et le contour intérieur,
des disques d'écartement (60) disposés devant les faces frontales tournées l'une vers l'autre du corps (64) discoïde et pouvant coulisser en direction des faces frontales (30) de l'outil de formage (21),
l'agencement d'ouvertures dans le support de noyau d'enroulement, dans la zone des sections coniques (58) du noyau d'enroulement, et
des outils d'appui (76) coopérant avec l'outil de formage (21), à l'aide desquels chaque espace situé entre la surface extérieure des sections coniques du noyau d'enroulement élastique et les faces frontales (30) de l'outil de formage (21) peuvent être recouverts.

8. Dispositif selon la revendication 7, caractérisé en ce que l'outil d'appui (72) est en forme de cloche et disposé coulissant en direction axiale sur le support de noyau d'enroulement (2).

9. Dispositif selon la revendication 7, caractérisé en ce que les sections coniques (58) du noyau d'enroulement sont bombées.

10. Dispositif de fabrication d'éléments de construction en matériau composite à base de fibres, présentant une zone tubulaire et, s'y raccordant, au moins une bride plane, avec un noyau d'enroulement cylindrique pour l'enroulement de la section tubulaire, et au moins un disque d'écartement rond coaxial au noyau d'enroulement, pour l'enroulement de la bride, avec un diamètre supérieur au diamètre du noyau d'enroulement,
caractérisé par
un support de noyau d'enroulement (2) cylindrique,
un noyau d'enroulement disposé sur le support de noyau d'enroulement avec deux sections coniques (84), réalisées en matériau élastique massif, pourvues d'appendices tubulaires (86) s'étendant dans la zone d'enroulement de la section tubulaire de l'élément de construction,
un outil de formage (21) en deux parties pour la section cylindrique de l'élément de construction, ayant des surfaces de division radiale, un contour intérieur cylindrique (26), des faces frontales (30) perpendiculaires par rapport à l'axe et des transitions arrondies (32) entre les faces frontales et le contour intérieur,
des disques d'écartement ronds (88), coulissant en direction axiale sur l'outil de formage (21) et sur lesquels les sections coniques du noyau d'enroulement prennent appui par leur base,
des fixations (92) à l'aide desquelles les disques d'écartement peuvent être bloqués dans la position qu'ils ont atteint après déformation des sections coniques du noyau d'enroulement, jusqu'à appui sur toute la surface sur les faces frontales (30) de l'outil de formage (21).

11. Dispositif selon la revendication 9, caractérisé en ce que des roues (92) pouvant être appliquées sur les extrémités du support de noyau d'enroulement (2) sont prévues comme fixations.

12. Dispositif selon la revendication 10, caractérisé en ce que les sections coniques (84) du noyau d'enroulement sont bombées.
